# EUROPÄISCHE PATENTSCHRIFT

(11) **EP 1 106 315 B1**
(45) Veröffentlichungstag und Bekanntmachung des Hinweises auf die Patenterteilung: **05.07.2006**
(21) Anmeldenummer: 00124675.0
(22) Anmeldetag: 11.11.2000
(51) Int. Cl.: B28B 7/00, B28B 11/04, C09K 3/18

(54) **Verfahren zur Erzeugung einer Selbstreinigungseigenschaft einer aus keramischem Material gebildeten Oberfläche**
Method for obtaining self-cleaning surfaces of products of ceramic.
Procédé d'obtention de surfaces auto-nettoyantes sur des produits de céramiques

(30) Priorität: 07.12.1999 DE 19958764
(43) Veröffentlichungstag der Anmeldung: 13.06.2001
(73) Patentinhaber: ERLUS AKTIENGESELLSCHAFT, 84088 Neufahrn (DE)
(72) Erfinder: Dendl, Peter, 93049 Regensburg (DE); Interwies, Jan, 84034 Landshut (DE)
(74) Vertreter: LOUIS, PÖHLAU, LOHRENTZ

(56) Entgegenhaltungen:
- EP-A- 0 772 514
- EP-A- 0 909 747
- EP-A- 0 933 388
- DE-C- 523 750
- DE-C- 625 384
- DATABASE WPI Section Ch, Week 199907 Derwent Publications Ltd., London, GB; Class A93, AN 1999-071373 XP002224032 & CN 1 194 290 A (DONGXING WATERPROOF MATERIAL FACTORY NEI), 30. September 1998 (1998-09-30)
- PATENT ABSTRACTS OF JAPAN vol. 1998, no. 03, 27. Februar 1998 (1998-02-27) & JP 09 295363 A (TOTO LTD), 18. November 1997 (1997-11-18)

## Beschreibung

Die Erfindung betrifft ein Verfahren zur Erzeugung einer Selbstreinigungseigenschaft einer keramischen Oberfläche durch Ausbildung einer hydrophoben Struktur von Erhebungen vorbestimmter Höhe und Verteilungsdichte auf der Oberfläche.

Verfahren der oben angegebenen Art sind grundsätzlich bekannt. Sie zielen darauf ab, auf der Oberfläche eine Struktur von hydrophoben Erhebungen zu erzeugen, auf welcher bei Beregnung oder Berieselung durch herabrollende Wassertropfen angesammelte Schmutzteilchen erfaßt und mitgenommen werden.

Bei einem bekannten Verfahren dieser Art (EP-A 772 514) wird die Selbstreinigungseigenschaft einer Oberfläche dadurch erzielt, daß die Oberfläche selbst aus einem hydrophoben Polymer gebildet ist und die gewünschte Oberflächenstruktur darauf geschaffen wird, indem der entsprechende Gegenstand von vornherein in einer Form hergestellt wird, die das Negativ der Oberflächenstruktur aufweist, oder indem die Struktur in die Oberfläche durch beheizte Prägestempel, Prägewalzen oder durch Siebe nach Art eines Siebdruckverfahrens eingeprägt wird. Das für die Selbstreinigungseigenschaft erforderliche hydrophobe Verhalten einer solchen Oberfläche wird entweder durch die hydrophobe Eigenschaft des Polymers selbst gewährleistet oder durch nachträgliches Hydrophobieren der zuvor mit der gewünschten Struktur hergestellten Oberfläche erreicht. Die so hergestellten selbstreinigenden Oberflächen aus Polymeren oder zumindest mit aus einem Polymer erzeugter Struktur sind mechanisch nur wenig widerstandsfähig und in der Anwendungsbreite daher beschränkt.

Weiterhin ist auch ein Verfahren zur Erzeugung einer selbstreinigenden keramischen Oberfläche bekannt (EP-A 909 747), bei dem die keramische Oberfläche mit einer Dispersion von Pulverpartikeln aus inertem Material in einer hydrophobierenden Siloxanlösung benetzt und das Siloxan ausgehärtet wird. Als Pulver kommt hierbei insbesondere ein Pulver aus gemahlener Keramik in Betracht, z.B. Ton. In einem ähnlichen bekannten Verfahren zur Hydrophobierung von Oberflächen (CH-A 268 258) wird ein feines Pulver aus Tonpartikeln mittels einer organischen Silikonharzlösung hydrophobiert und anschließend auf der zu hydrophobierenden Oberfläche durch ein aushärtbares organisches Silikonharz fixiert. Die Fixierung des feinen Pulvers kann durch Tauchen der Oberfläche in eine Suspension des hydrophobierten Pulvers in einer derartigen Harzlösung und anschließende Aushärtung des Harzes erfolgen. Durch diese bekannten Verfahren läßt sich zwar das selbstreinigende Verhalten auf stärker mechanisch beanspruchbare, z.B. keramische Oberflächen ausdehnen, jedoch hat sich gezeigt, daß die Haftfestigkeit des Siloxans bzw. Silikonharzes im Laufe der Benutzungsdauer der entsprechenden Keramikkörper abnimmt und sich die Tonpartikel von der Oberfläche bei mechanischer Beanspruchung lösen können. Damit geht die Selbstreinigungseigenschaft der Oberfläche im Laufe der Zeit verloren.

Aufgabe der Erfindung ist es daher, ein Verfahren der eingangs angegebenen Art vorzuschlagen, durch das auf keramischen. Material gebildeten Oberflächen eine mechanisch widerstandsfähige und daher auf lange Zeit selbstreinigende Struktur geschaffen werden kann.
Die Aufgabe wird gelöst durch das Verfahren gemäß Patentanspruch 1.

### Strukturausbildung

Die keramische Fläche erhält ihren endgültigen Gebrauchszustand erst nach dem Brand bei relativ hoher Temperatur. Daraus folgt, daß der für die Selbstreinigungseigenschaft notwendige hydrophobe Zustand an der keramischen Oberfläche erst nachträglich erzeugt werden kann, weil die bekannten Hydrophobierungsmittel der Brenntemperatur nicht standhalten.

Es war nicht ohne weiteres zu erwarten, daß sich unmittelbar an einer keramischen Oberfläche eine Erhebungsstruktur mit selbstreinigender Eigenschaft durch positives Abbilden des Negativs der Struktur an einer Formfläche erzeugen läßt, wie das bei den eingangs geschilderten polymeren Oberflächen möglich ist. Denn die keramische Masse besteht aus einem teilchenförmigen Grundmaterial mit einer Teilchenfraktion deren Teilchengröße über der Obergrenze von 100 µm liegt, die in der eingangs genannten EP-A 772 514 für die Erzielung der Selbstreinigungseigenschaft als brauchbar mitgeteilt ist. Da die Struktur der Formfläche entsprechend bemessen sein muß, hat damit gerechnet werden müssen, daß sie sich in der noch formfähigen Masse bzw. in dem Gemenge nicht brauchbar abbilden läßt, weil sie durch den Brennvorgang bzw. durch den Aushärtungsprozeß aufgrund der dabei eintretenden Schwindung der Bindungskomponente vergröbert werden kann. Es hat sich jedoch gezeigt, daß die eingeprägte Struktur auch nach dem Brand bzw. der Aushärtung deutlich erhalten bleibt und eine sehr gute Selbstreinigungseigenschaft ergibt. Die exakte Abbildung und Beibehaltung der eingeprägten Struktur kann zusätzlich gesteuert werden durch die Wahl von Bindekomponenten mit betont geringer Schwindung. Darüber hinaus hat sich gezeigt, daß die Selbstreinigungsfähigkeit der Oberfläche auch bei erheblich größeren Erhebungen, nämlich im Bereich von 1 bis 1000 µm sowie mit einer Verteilungsdichte von 0 bis 500 µm eintritt.

Die an der Formfläche vorgesehene Struktur auf der zu behandelnden Oberfläche läßt sich mit unterschiedlichen Vorgehensweisen abbilden. So kann das Negativ der Struktur an mindestens einer Formwandung einer Formhöhlung vorgesehen sein, die zur Herstellung des Keramik- oder Betonkörpers dient. Die keramische Masse kann in fließfähigem oder zumindest noch bildsamem Zustand in die Formhöhlung eingebracht werden und ein darauf ausgeübter Druck bewirkt das innige Anpressen an die das Negativ der Struktur aufweisende Formfläche. Je nach der Steife der Masse bzw. des Gemenges kann allein auf den durch das Eigengewicht erzeugten Druck vertraut werden, wenn dafür gesorgt ist, daß die Gesamtmenge an Masse in der Formhöhlung über der strukturgebenden Formfläche liegt. Zweckmäßigerweise wird aber die Form als Preßform ausgebildet, die entweder mit einem Überschuß an Masse gefüllt wird und im Zuge des Schließens der Preßform überschüssiges Material verdrängt und Druck auf die Masse bzw. das Gemenge ausgeübt wird. Oder das Formgebungsverfahren ist ein Preßverfahren bei dem durch einen von einer Schnecke oder dergleichen ausgeübten Spritz- oder Fülldruck oder über eine verstellbare Formwandung die in der Formhöhlung befindliche Masse unter Druck gesetzt wird. Das erstgenannte Verfahren entspricht bei der Grobkeramik beispielsweise der Herstellung von Dachziegeln, die mittels Gipsformen erfolgt. Das erfindungsgemäße Verfahren sieht in diesem Fall vor, daß das Negativ der Struktur an einer vorzugsweise metallischen Formwandung der Preßform ausgebildet ist. Ein typischer Fall des zweitgenannten Verfahrens ist beispielsweise das isostatische Pressen. Hier kann erfindungsgemäß, beispielsweise bei der Herstellung von keramischen Kaminrohren mit einer selbstreinigenden Innenwandung, der die Innenwandung formende Metalldorn oder -kern das Negativ der Struktur aufweisen.

In den Formgebungsverfahren, bei denen die Masse in eine Formhöhlung eingebracht wird, ist die Konsistenz der Masse insofern nicht kritisch, als der Druckkontakt mit der zu strukturierenden Oberfläche ohne weiters so lange aufrecht erhalten werden kann, bis eine hinreichende Verfestigung eingetreten ist. Diese tritt entweder durch Abfuhr von Feuchtigkeit, durch Wirksamwerden des Bindemittels aufgrund des herrschenden Druckes und/oder durch chemische Reaktion des Bindemittels ein. Daher kann bei diesen Verfahren die Konsistenz der keramischen Masse von einem weitgehend flüssigen Zustand (Schlicker) bis zu einem gerade noch bildsamen Zustand reichen, der das Einbringen in die Formhöhlung und die Weiterleitung des ausgeübten Drucks erlaubt.

Die das Negativ der Struktur aufweisende Formfläche kann aber auch an formgebenden Elementen vorgesehen sein, die mit der zu strukturierenden Oberfläche nur relativ kurz in Prägekontakt kommen. Das gilt z.B. für Preßstempel oder Prägewalzen. In diesem Fall muß die Oberfläche einen noch bildsamen, jedoch soweit verfestigten Zustand haben, daß nach dem vorübergehenden Druckkontakt die positiv abgebildete Struktur erhalten bleibt. Gegebenenfalls ist daran zu denken, den die Oberfläche aufweisenden Körper in einer Stützform zu halten oder aufzunehmen, um während des Druckkontakts mit dem Preßstempel oder der Prägewalze eine unerwünschte Verformung an anderen Flächen des Körpers zu vermeiden. Dieses Verfahren kommt in Betracht bei dem Strangpreßverfahren von Keramikkörpern, beispielsweise von Biberschwanz-Dachziegeln. Hierbei wird der aus der Preßdüse austretende Strang auf einem Transportband abgestützt, sodaß ein von oben her wirkender Präge- oder Preßstempel aufgedrückt werden kann.

Da bei dem erfindungsgemäßen Verfahren durch die Lage und Größe der strukturbildenden Formfläche deren Wiedergabe auf der zu strukturierenden Oberfläche bestimmt werden kann, ist es auch möglich, die Struktur gezielt in bestimmten Bereichen der Oberfläche vorzusehen oder die Struktur in solchen Bereichen bezüglich der Höhe und/oder der Verteilungsdichte der Erhebungen unterschiedlich zu gestalten.

### Hydrophobierung

Bei allen vorstehend beschriebenen Verfahren, die keramische Oberflächen betreffen, wird anschließend an den Brennvorgang die keramische Oberfläche hydrophobiert, um die Oberfläche und insbesondere die Struktur darauf hydrophob zu machen, wodurch letztlich die angestrebte Selbstreinigungseigenschaft entsteht.

Das Hydrophobieren kann in bekannter Weise und mit bekannten Mitteln, z.B. durch Anwendung von Polysiloxanen, durchgeführt werden. Es ist aber auch möglich, hierfür anorganisch-organische Hybridpolymere oder Fluorsilane zu verwenden. Als anorganisch-organische Hybridpolymere kommen Verbindungen in Betracht, die ein molekulares oder nanostrukturiertes Basismaterial mit anorganischen und organischen Elementen aufweisen (vgl. "First European Workshop on Hybrid Organic-Inorganic Materials - Centre National de la Recherche Scientifique, Chäteau de Bierville, 8.-10. November 1993). Solche Hybridpolymere sind bekannt unter dem Markennamen ORMOCER des Fraunhofer-Instituts für Silikat ISC, Würzburg oder durch die Firma nanogate GmbH, Saarbrücken. Hergestellt werden die Hybridpolymere überwiegend durch Hydrolyse und Kondensation von Kieselsäureestern und Metallalkoholaten als Grundmaterialien. Spezielle Eigenschaften erhalten diese Systeme durch den Einbau von organisch modifizierten Kieselsäurederivaten in das Silikat-Netzwerk. Dadurch können gezielt erwünschte Eigenschaften eingestellt werden und außerdem bewirken die organischen Anteile den Aufbau eines organischen Polymer-Netzwerks.

Die Hybridpolymere können in Wasser oder Lösemitteln dispergiert oder gelöst werden, so daß das Auftragen auf die zu behandelnde Oberfläche mit den üblichen Beschichtungstechniken wie Tauchen, Schleudern, Polieren, Gießen, Spritzen, Aufdampfen oder elektrostatischem Auftragen möglich ist. An das Auftragverfahren schließt sich ein Trocknungs- oder Härtungsprozeß an, der durch thermische Behandlung oder mit Hilfe von UV- oder Wärmestrahlung durchführbar ist. Je nach Bestimmungsart der Hybridpolymere kann die thermische Behandlung und Trocknung zwischen Raumtemperatur und 600°C durchgeführt werden.

Die Beschichtung keramischer glasierter Oberflächen mit anorganisch-organischen Hybridpolymeren dieser Art, beispielsweise im Sanitärbereich, ist bereits bekannt. Im vorliegenden Fall wird jedoch der Umstand ausgenützt, daß die Hybridpolymere auch an insbesondere grobkeramischen Oberflächen, von denen geringe Wasserdurchlässigkeit verbunden mit Atmungsfähigkeit gefordert ist,wie z.B. bei Dachziegeln, ohne Beeinträchtigung der Atmungsfähigkeit zur Hydrophobierung herangezogen werden können. Offenbar wird dies dadurch erreicht, daß die die Hybridpolymere aufbauenden Teilchen eine Größe im Nano-Bereich haben und entsprechend dünne, jedoch wirksame Schichten bilden können. Deshalb werden die Porenöffnungen des Kapillargefüges der keramischen Oberfläche und die freien Flächen des Kapillargefüges nahe der Oberfläche im Inneren des Keramikkörpers nicht verlegt und der dadurch gebildete Atmungsquerschnitt nicht erheblich herabgesetzt. Ist aber Atmungsaktivität der keramischen Oberfläche nicht benötigt oder erwünscht und wird, wie das beispielsweise bei Kaminrohren der Fall ist, eine Diffusions- und Feuchtigkeitssperre in der keramischen Oberfläche angestrebt, so kann bei entsprechend ausgedehnter Behandlung durch die Hybridpolymere oder durch Auswahl entsprechend porenverstopfender Hybridpolymere die Hydrophobierung in diesem Sinn ausgeführt werden.

Weiterhin hat sich überraschend gezeigt, daß die Hybridpolymere auch an nicht glasierten keramischen Oberflächen, die naturgemäß eine feinporöse Struktur des Keramikmaterials aufweisen, mit einer beträchtlichen Abtragfestigkeit gebunden werden können. Dies gilt auch für keramische Oberflächen mit der allein durch die Minerale des Keramikmaterials gebildeten Struktur, die durch die Beseitigung der beim Brand entstehenden Glasphase gemäß dem ersten der beschriebenen erfindungsgemäßen Verfahren entsteht. Die bekannte Bindung der Hybridpolymere bei den genannten glasierten Keramikoberflächen im Sanitärbereich wird einer Bindung von Komponenten des Silikat-Netzwerks an die SiO₂-Anteile der Glasur zugesprochen, die bei nicht glasierten keramischen Oberflächen weitgehend fehlt. Offenbar gehen die Hybridpolymere bei der erfindungsgemäßen Behandlung auch grobkeramischer Oberflächen eine Bindung an SiO₂-Reste des Keramikmaterials ein, die zu der unerwarteten Haftfestigkeit führen.

Die Hybridpolymere dieser Art haben weitere Eigenschaften, die sie auch für die Verwendung zur Hydrophobierung von keramischen Oberflächen geeignet machen. So besteht keine Gefahr, daß dadurch Farben der Oberflächen verändert oder beeinträchtigt werden, weil die Hybridpolymere aufgrund der Kleinheit ihrer Teilchen die Reflexionsfähigkeit der Oberflächen nicht beeinträchtigen. Weiterhin wird durch die hydrophoben und lipophoben Gruppen, die in Hybridpolymere dieser Art "eingebaut" werden können, die durch die Struktur erzeugte Selbstreinigungseigenschaft der dadurch behandelten keramischen Oberflächen noch gesteigert. Deshalb kann damit gerechnet werden, daß Dachbaustoffe, insbesondere Dachziegel, oder Klinker- und Fassadenwände, die erfindungsgemäß strukturierte und hydrophobierte keramische Oberflächen aufweisen, allein durch Regen (oder durch gezielte Berieselung mit Wasser) von Schmutz frei bleiben. Darüber hinaus sind die Hybridpolymere sehr UV- und witterungsbeständig, wodurch die stark hydrophobe Eigenschaft der keramischen Oberflächen lang erhalten bleibt. Der ausgeprägte Selbstreinigungseffekt wird bei Kamin-Rauchrohren ausgenützt, um die Innenfläche davon durch das herablaufende Kondensat von Ruß und sonstigen festen Anlagerungen oder Verschmutzungen freizuhalten.

Die zur Hydrophobierung eingesetzten Hybridpolymere oder Fluorsilane können neben ihrer hydrophoben Eigenschaft auch auf hohe mechanische Widerstand- und Haftfestigkeit ausgelegt werden. Ihr Einsatz ist sogar zur Erhöhung der Kratzfestigkeit von glatten Oberflächen bekannt. Daher haften sie nach der Trocknung bzw. Aushärtung so fest an der behandelten keramischen Oberfläche, daß keine Beeinträchtigung der erzielten hydrophoben Eigenschaft durch mechanische Abtragung zu befürchten ist. So können erfindungsgemäß behandelte Keramikkörper in üblicher Weise transportiert und mechanisch belastet werden.Im vorliegenden Fall führt die Anwendung der Hybridpolymere oder Fluorsilane dazu, daß nach dem Hydrophobieren der die Erhebungen aufweisenden keramischen Oberfläche die an sich aufgrund ihrer exponierten Lage mechanisch stärker beanspruchten Erhebungen nachhaltig sowohl hydrophobiert bleiben als auch ein gegebenenfalls eingesetztes Antifoulingmittel darin gehalten wird, auch wenn beispielsweise so behandelte Dachziegel häufig begangen werden.

Als Fluorsilane kommen fluoralkylfunktionelle Silane in Betracht, die mit Wasser unter Hydrolyse und Abspaltung von Ethanol zu einem reaktiven Silanol reagieren, wobei das Silanol chemisch an ein anorganisches Substrat gebunden werden kann. Durch chemische Reaktion mit der zu behandelnden Oberfläche wird eine Si-O-Bindung an die Oberfläche ausgebildet. Daran schließt sich eine Quervernetzung unter Ausbildung eines Siloxan-Netzwerks an. Die Fluorsilane ergeben ebenfalls außerordentlich dünne Schichten im Nanometerbereich, die in den Porenöffnungen des Kapillargefüges der keramischen Oberfläche und auf den freien Flächen des Kapillargefüges nahe der Oberfläche im Inneren des Keramikkörpers aufgebaut werden. Daher läßt sich mittels der Fluorsilane eine Hydrophobierung insbesondere grobkeramischer Oberflächen erreichen, durch welche die häufig erwünschte Atmungsfähigkeit nicht herabgesetzt wird. Auch hier kann durch entsprechend ausgedehnte Behandlungsdauer oder durch Auswahl gezielt porenverstopfender Fluorsilane eine nicht erforderliche oder sogar unerwünschte Atmungsfähigkeit unterbunden und dadurch eine Diffusions- und Feuchtigkeitssperre erzielt werden.

Fluorsilane der beschriebenen Art sind im Handel unter dem Markennamen DYNASYLAN F 8261 (in Abwandlungen davon unter F 8810, F 8262 und F 8263) der Firma Sivento Chemie GmbH, Düsseldorf, erhältlich.

Die Fluorsilane können mit Wasser und Lösemitteln, z. B. Ethanol, gemischt werden, so daß das Auftragen auf die zu behandelnde Oberfläche mit den üblichen Beschichtungstechniken wie Tauchen, Sprühen, Streichen oder Polieren möglich ist. An das Auftragverfahren schließt sich ein Trocknungs- oder Vernetzungsprozeß an, der durch thermische Behandlung oder mit Hilfe von UV- oder Wärmestrahlung durchführbar ist. Die thermische Behandlung kann zwischen Raumtemperatur und 150°C durchgeführt werden. Günstiger ist jedoch ein Einbrennvorgang bei Temperaturen bis 600°C, weil sich gezeigt hat, daß dadurch ohne ins Gewicht fallende Herabsetzung der erhaltenen hydrophoben Eigenschaft eine erhebliche Steigerung der mechanischen Belastbarkeit, wie Abriebfestigkeit, mit einhergeht.

Auch die Fluorsilane haben weitere Eigenschaften, die sie für die Verwendung zur Hydrophobierung von keramischen Oberflächen geeignet machen. So besteht keine Gefahr, daß dadurch Farben der Oberflächen verändert oder beeinträchtigt werden, weil aufgrund der so geringen Schichtdicken die Reflexionsfähigkeit der keramischen Oberflächen nicht beeinträchtigt wird. Weiterhin wird durch ihre hydrophobe und lipophobe Eigenschaft die schon durch die Strukturierung erzielte Selbstreinigungseigenschaft der keramischen Oberflächen noch gefördert. Deshalb kann damit gerechnet werden, daß Dachbaustoffe, insbesondere Dachziegel sowie Klinker- und Fassadenwände, die erfindungsgemäß behandelte keramische Oberflächen aufweisen, allein durch Regen (oder durch gezielte Berieselung mit Wasser) von Schmutz frei bleiben. Darüber hinaus sind die Fluorsilane sehr UV- und witterungsbeständig, wodurch die stark hydrophobe Eigenschaft und damit der Selbstreinigungseffekt der keramischen Oberflächen lang erhalten bleibt.

Das Verfahren zur Hydrophobierung kann auch unter Heranziehung von unterschiedlichen Hydrophobierungsmitteln durchgeführt werden. Diese können in der Form eingesetzt werden, daß in einer ersten Behandlungsstufe ein weniger UV-beständiges und daher billigeres Mittel verwendet wird, durch welches das oberflächennahe Kapillargefüge der Oberfläche bis zu einer gewünschten Tiefe imprägniert wird. In einer zweiten Behandlungsstufe wird dann mit einem UVbeständigen und daher teureren Mittel gearbeitet, das somit weitgehend auf die Oberfläche beschränkt ist und den hydrophoben Zustand über lange Zeit hinweg aufrecht erhält. Als Beispiel sei genannt eine Hydrophobierung in der ersten Behandlungsstufe mittels der herkömmlich verwendeten Polysiloxane oder Silane und eine nachfolgende zweite Behandlungsstufe mit Hybridpolymeren oder Fluorsilanen.

### Behandlung mit einem bewuchshemmenden Mittel

Neben der Behandlung der keramischen Oberfläche zur Hydrophobierung kann auch eine Behandlung mit einem bewuchshemmenden Mittel (Antifouling-Mittel) durchgeführt werden. Grundsätzlich kann das bewuchshemmende Mittel in einer Flüssigkeit, mit der die keramische Oberfläche behandelt wird, enthalten sein. Als solche Mittel kommen diejenigen in Betracht, die in bekannten Antifouling-Farben zum Einsatz kommen und Kupfer, Zink, Zinn, Bromide, Phosphate, Fluoride usw. als Wirkstoffe enthalten. Zweckmäßigerweise ist das Antifouling-Mittel aber bereits in der Flüssigkeit enthalten, die zur Hydrophobierung der Oberfläche herangezogen wird. Um die vorstehend beschriebenen Vorteile der Hybridpolymere auszunützen, ist vorzuziehen, daß bewuchshemmende Gruppen oder Radikale der genannten Verbindungen unmittelbar in das Netzwerk der Hybridpolymere eingebunden sind. Die Fluorsilane haben von sich aus bereits eine bewuchshemmende Wirkung, die sie sogar zum Einsatz als Antifouling-Mittel in Farben geeignet macht. Es kann auch hier daran gedacht sein, daß bewuchshemmende Gruppen oder Radikale der genannten Verbindungen unmittelbar in das Netzwerk der Fluorsilane eingebunden sind.

Das Einbringen von bewuchshemmendem Mittel in die keramische Oberfläche kann aber auch bereits vor dem Brand des entsprechenden Keramikkörpers erfolgen. Hierzu kann das Antifouling-Mittel auf die im Rahmen der vorstehend beschriebenen erfindungsgemäßen Verfahren noch zu behandelnde bzw. soeben behandelte Oberfläche aufgetragen und darin infiltriert werden. In diesem Fall dringt das Antifouling-Mittel in die Oberfläche ein und bleibt in dieser auch nach dem Brand erhalten. Im Fall der Strukturierung einer Betonoberfläche kann das Antifouling-Mittel wie das Hydrophobiermittel unmittelbar dem Gemenge schon vor dem Aushärten zugegeben werden.

Das erfindungsgemäße Verfahren zur Erzeugung eines Selbstreinigungseffekts von keramischen Oberflächen ist gedacht und anwendbar auf jedem Gebiet der Keramik, wo ein Selbstreinigungseffekt denkbar und sinnvoll erscheint. In erster Linie gilt das für solche Keramikkörper, die üblicherweise der Witterung ausgesetzt sind und der Selbstreinigungseffekt durch natürliche Beregnung eintreten kann und daher keiner besonderen Reinigungsaktivität bedarf. Jedoch gilt das auch in Fällen, in denen Keramikkörper einer Verschmutzung (z. B. durch Staub, Öldunst oder Ablagerungen durch umgebende Strömung) ausgesetzt sind ohne sich im Freien zu befinden und daher nicht beregnet werden können. In diesem Fall liegt der Vorteil der Selbstreinigungsfähigkeit darin, daß die Verschmutzung einfach durch Berieseln oder Abwaschen mit einer Reinigungsflüssigkeit, vorzugsweise mit Wasser, beseitigt werden kann.

Auf dem Gebiet der Baustoff- und Grobkeramik, z.B. für Dachziegel, Klinker- und Fassadenwände, mit Keramikmaterial belegten Freitreppen und dgl., findet die Selbstreinigung allein durch immer wieder auftretenden Regen statt. Deshalb ist es zweckmäßig, diejenigen Flächen zu strukturieren, die sowohl der Verschmutzung als auch dem Regen ausgesetzt sein werden. Bei Dachziegeln oder Klinkern gilt das in erster Linie für deren Sichtseiten, erweist sich aber auch für die Unter- oder Hinterseiten davon als sinnvoll, wenn mit deren Verschmutzung während der Lagerung auf offenen Lagerflächen zu rechnen ist.

Entsprechendes gilt auch für Feinkeramik, z.B. für Fliesen, Waschbecken und sonstige Artikel der Sanitätskeramik bei denen eine Berieselung in Bädern und Naßzellen sowohl bei Benutzung wie bei gezieltem Abwaschen erfolgt. Weiterhin erweist sich die Ausnutzung des Selbstreinigungseffekts aber auch bei Keramikkörpern der Elektrokeramik als von Vorteil, z.B. bei elektrischen Isolatoren von Schaltern oder Leitungen, die im Freien dem Schmutz- und Staubniederschlag ausgesetzt sind. Nässe plus Schmutzschichten erhöhen hier die Neigung zu Überschlag und können leicht entfernt werden, wenn solche Keramikkörper an ihrer Oberfläche durch Anwendung des erfindungsgemäßen Verfahrens entsprechend strukturiert sind. Auch an den Innenflächen von Keramik-Rauchrohren kann es von Vorteil sein, durch Ausbildung einer den Selbstreinigungseffekt bewirkenden Struktur dafür zu sorgen, daß durch herablaufendes Wasser (z.B. durch Einregnen) oder auch durch herablaufendes Kondensat die Innenfläche von Ruß und festen Anlagerungen oder Verschmutzungen freigehalten wird. Weiterhin empfiehlt sich die erfindungsgemäß geschaffene Selbstreinigungsfähigkeit auch für Keramikkörper der Gebrauchskeramik, z. B. Blumentöpfe, Blumenvasen, Geschirr und dergleichen, die dadurch gegebenenfalls auch ohne Verwendung von Reinigungsmitteln allein durch Wasser leicht gesäubert werden können. Schließlich kann die Schaffung eines Selbstreinigungseffekts auch bei Keramikkörpern auf dem Gebiet der technischen Keramik sinnvoll sein, z. B. bei solchen Keramikkörpern, auf denen durch Kontakt mit ständiger oder vorübergehender Strömung Anlagerungen entstehen können. Dies ist beispielsweise bei Keramikdichtungen oder Keramikventilkörpern der Fall, bei denen es wesentlich ist, die jeweilige Dichtfläche von Anlagerungen freizuhalten.

Entsprechend ist das Anwendungsgebiet des erfindungsgemäßen Verfahrens, durch das ein Selbstreinigungseffekt auf Oberflächen aus Beton oder betonähnlichem Material erzielt wird. Hier kommen vor allem Anwendungsgebiete in Betracht, auf denen Betongegenstände im Austausch zu Keramikgegenständen eingesetzt werden, insbesondere auf dem Bausektor in Form von Dachsteinen, Bodenbelägen und Bodenplatten, Treppenstufen usw. sowie an Tragwerken wie Brücken oder dgl.

## Patentansprüche

1. Verfahren zur Erzeugung einer Selbstreinigungseigenschaft einer keramischen Oberfläche durch Ausbildung einer Struktur von Erhebungen vorbestimmter Höhe und Verteilungsdichte auf der Oberfläche, **dadurch gekennzeichnet, dass** die keramische Masse, die eine Teilchengröße größer als 100 µm aufweist, in einem formbaren Zustand in Druckkontakt mit einer das Negativ der oben genannten Struktur aufweisenden Formfläche gebracht wird, um in der Oberfläche positiv die Struktur mit Erhebungen im Bereich von 1 bis 1000 um abzubilden, die Oberfläche gebrannt und danach hydrophobiert wird.

2. Verfahren nach Anspruch 1,
**dadurch gekennzeichnet,**
**dass** die das Negativ der Struktur aufweisende Formfläche zumindest ein Teil der formgebenden Wand einer Formhöhlung ist, in welche die Masse in einem fließfähigen Zustand eingebracht und unter Druck gesetzt wird.

3. Verfahren nach Anspruch 2,
**dadurch gekennzeichnet,**
**dass** die Masse durch das Eigengewicht unter Druck gesetzt wird.

4. Verfahren nach Anspruch 2,
**dadurch gekennzeichnet,**
**dass** die Fonnhöhtung in einer Preßform ausgebildet ist und die Masse durch Schließen der Preßform unter Druck gesetzt wird.

5. Verfahren nach Anspruch 2,
**dadurch gekennzeichnet,**
**dass** die Formhöhlung in einer Preßform ausgebildet ist und die Masse durch Andrücken eines Teils der formgebenden Wand an die Masse bzw. das Gemenge unter Druck gesetzt wird.

6. Verfahren nach Anspruch 2,
**dadurch gekennzeichnet,**
**dass** die Masse durch eine Fördereinrichtung für die Masse bzw. das Gemenge unter Druck gesetzt wird.

7. Verfahren nach Anspruch 1,
**dadurch gekennzeichnet,**
**dass** die das Negativ der Struktur aufweisende Formfläche an einem Preßstempel vorgesehen ist, dass die Masse mittels einer Stützform mit freiliegender Oberfläche gehalten wird und die Formfläche durch den Preßstempel an die Oberfläche angedrückt wird.

8. Verfahren nach Anspruch 1,
**dadurch gekennzeichnet,**
**dass** die das Negativ der Struktur aufweisende Formfläche an einer Profilwalze vorgesehen ist, dass die Masse mittels einer Stützform mit freiliegender Oberfläche gehalten wird und die Profilwalze an die Oberfläche angedrückt und darauf abgerollt wird.

9. Verfahren nach einem der Ansprüche 1 bis 8,
**dadurch gekennzeichnet,**
**dass** auf der Oberfläche bereichsweise Strukturen mit jeweils unterschiedlicher Höhe und/oder Verteilungsdichte der Erhebungen ausgebildet werden.

## Claims

1. Process for producing a self-cleaning property of a ceramic surface by formation of a structure of raised regions having a predetermined height and distribution density on the surface, **characterized in that** the ceramic composition, which has a particle size of greater than 100 µm, is brought in a mouldable state into pressure contact with a mould surface having the negative of the abovementioned structure in order to form a positive of the structure having raised regions in the range from 1 to 1000 µm in the surface, the surface is fired and then hydrophobicized.

2. Process according to Claim 1, **characterized in that** the mould surface having the negative of the structure is at least part of the shape-imparting wall of a mould hollow into which the composition is introduced in a flowable state and is placed under pressure.

3. Process according to Claim 2, **characterized in that** the composition is placed under pressure by means of its own weight.

4. Process according to Claim 2, **characterized in that** the mould hollow is formed in a pressing mould and the composition is placed under pressure by closing the pressing mould.

5. Process according to Claim 2, **characterized in that** the mould hollow is formed in a pressing mould and the composition is placed under pressure by pressing part of the shape-imparting wall against the composition or the mixture.

6. Process according to Claim 2, **characterized in that** the composition is placed under pressure by means of a transport device for the composition or the mixture.

7. Process according to Claim 1, **characterized in that** the mould surface having the negative of the structure is provided on a punch, **in that** an exposed surface of the composition is maintained by means of a support mould and the mould surface is pressed against the surface by means of the punch.

8. Process according to Claim 1, **characterized in that** the mould surface having the negative of the structure is provided on a profiled roller, **in that** an exposed surface of the composition is maintained by means of a support mould and the profiled roller is pressed against the surface and rolled over it.

9. Process according to any of Claims 1 to 8, **characterized in that** structures having at least a different height and/or distribution density of the raised regions are formed on parts of the surface.

## Revendications

1. Procédé d'obtention d'une propriété d'auto-nettoyage sur une surface céramique par la réalisation d'une structure avec des bosses ayant une hauteur et une densité de répartition prédéfinies sur la surface, **caractérisé en ce que** la masse céramique, qui possède une granulométrie supérieure à 100 µm, est amenée, à l'état de moulage, en contact par pression avec une surface de formage ayant la forme négative de la structure susmentionnée, afin de reproduire dans la surface la forme positive de la structure avec des bosses dans une plage de 1 à 1 000 µm, la surface est cuite et est ensuite imperméabilisée.

2. Procédé selon la revendication 1, **caractérisé en ce que** la surface de formage comportant la forme négative de la structure est au moins une partie de la paroi de formage d'une cavité de moulage, dans laquelle la masse est introduite à l'état liquide et mise sous pression.

3. Procédé selon la revendication 2, **caractérisé en ce que** la masse est mise sous pression par son propre poids.

4. Procédé selon la revendication 2, **caractérisé en ce que** la cavité de moulage est réalisée dans un moule de pressage et la masse est mise sous pression par la fermeture du moule de pressage.

5. Procédé selon la revendication 2, **caractérisé en ce que** la cavité de moulage est réalisée dans un moule de pressage et la masse est mise sous pression par la pression d'une partie de la paroi de formage contre la masse, plus précisément le mélange.

6. Procédé selon la revendication 2, **caractérisé en ce que** la masse est mise sous pression par un dispositif de transport pour la masse, plus précisément le mélange.

7. Procédé selon la revendication 1, **caractérisé en ce que** la surface de formage possédant la forme négative de la structure est prévue sur un poinçon de pressage, **en ce que** la masse est maintenue au moyen d'un moule de support à surface dégagée et la surface de formage est appuyée contre la surface au moyen du poinçon de pressage.

8. Procédé selon la revendication 1, **caractérisé en ce que** la surface de formage possédant la forme négative de la structure est prévue sur un cylindre profilé, **en ce que** la masse est maintenue au moyen d'un moule de support à surface dégagée et le cylindre profilé est pressé contre la surface et roule sur celle-ci.

9. Procédé selon l'une quelconque des revendications 1 à 8, **caractérisé en ce que** des structures ayant chacune une hauteur et/ou une densité de répartition différentes des bosses sont réalisées par zones sur la surface.
